# EUROPEAN PATENT SPECIFICATION

(11) **EP 4 636 267 B1**
(45) Date of publication and mention of the grant of the patent: **26.08.2026**
(21) Application number: 25192768.7
(22) Date of filing: 16.09.2022
(51) Int. Cl.: F16B 19/10

(54) **SINGLE-SIDED FASTENER**
EINSEITIGES BEFESTIGUNGSELEMENT
ÉLÉMENT DE FIXATION À UN SEUL CÔTÉ

(30) Priority: 16.09.2021 GB 202113220; 16.09.2021 GB 202113223; 16.09.2021 GB 202113225
(43) Date of publication of application: 22.10.2025
(62) Document number(s) of the earlier application(s) in accordance with Art. 76 EPC: 22789679.2 / 4 402 386
(73) Proprietor: Kwikbolt Limited, Isleworth, TW7 6ER (GB)
(72) Inventor: Niklewicz, Jan, Isleworth, TW7 6ER (GB)
(74) Representative: Williams, Ben

(56) References cited:
- EP-B1- 3 108 148
- US-A1- 2019 211 862
- US-A1- 2020 063 782
- US-A1- 2020 347 867
- US-B2- 10 982 701

## Description

### Field of the Invention

This invention relates in general to the field of fasteners for use in clamping components and, in particular, to a temporary single-sided fastener which can be used in apertures where it is not possible to access the reverse of the components.

### Background of the Invention

Temporary fasteners are used during the fabrication of complex structures such as aircraft frames to align components before permanent fasteners are installed. The number and location of the temporary fastenings will vary between applications, but for a typical wing set, i.e. two complete wings, for a large commercial passenger aircraft, the number of temporary fastenings used can reach around 25,000. It is convenient for such temporary fasteners to be operated from one side of the work-piece only, i.e. to insert and activate the fastener from above the work-piece without having to hold a part of the fastener from the underside of the work-piece, as would be the case for a nut and bolt, because often it is not possible to access both sides of the pieces being clamped simultaneously.

Fasteners that operate from one side are called "blind" fasteners and they typically have a threaded part that carries a set of expandable legs. In some examples, the legs have protruding heads for applying the clamping load and the legs can be expanded when inserted into an aperture and drawn towards the work-piece by rotation of the threaded part until the desired clamping load is achieved. When the fastener is no longer required, the legs can be retracted to allow removal of the fostered by rotation of the threaded part in the opposite direction.

However, a problem with known fasteners is that the fasteners can be damaged upon removal by over-rotation of the threaded part in the loosening direction. In particular, the use of mechanical means for rotation of the threaded part, e.g. an air impact wrench, can cause damage to the threaded part of the fastener. Existing attempts to solve this problem result in a relative movement between a rotatable head of the threaded portion and a main body of the fastener. Such relative movement can cause difficulty in positioning a rotary tool for rotation of the threaded part, especially for automated systems. A fastener of the prior art is shown in US 10982701 B2.

As such, there is a need for an improved single-sided fastener. The present invention aims to address this need.

### Summary of the Invention.

According to a first aspect of the present invention, there is provided a fastener according to claim 1.

According to a second aspect of the present invention, there is provided a method of fastening a work piece according to claim 14.

Optional features are as set out in the dependent claims.

### Brief Description of the Drawings.

For a better understanding of the present invention and to show more clearly how it may be carried into effect, reference will now be made by way of example only, to the accompanying drawings, in which:
Figure 1 is schematic diagram showing the components of a fastener according to a first embodiment;
Figure 2 is a schematic diagram showing a proximal end of the fastener according to the first embodiment;
Figure 3 is a schematic diagram showing a cross-section of the fastener according to the first embodiment;
Figure 4 is a schematic diagram showing a side elevation cross-section of the fastener of the first embodiment in use;
Figure 5 is a schematic diagram showing a side elevation cross-section of the fastener of the first embodiment in use;
Figure 6 is a schematic diagram showing a side elevation cross-section of the fastener of the first embodiment in use;
Figure 7 is schematic diagram showing the components of a fastener according to a second embodiment;
Figure 8 is a schematic diagram showing a cross-section of the fastener according to the second embodiment;
Figure 9 is a schematic diagram showing a side elevation cross-section of the fastener of the second embodiment in use;
Figure 10 is a schematic diagram showing a side elevation cross-section of the fastener of the second embodiment in use; and
Figure 11 is a schematic diagram showing a side elevation cross-section of the fastener of the second embodiment in use.

### Detailed Description of the Invention.

The present invention relates to a fastener. In particular, the invention relates to a single-sided temporary fastener including a free-spin feature, which can prevent damage to the fastener on removal.

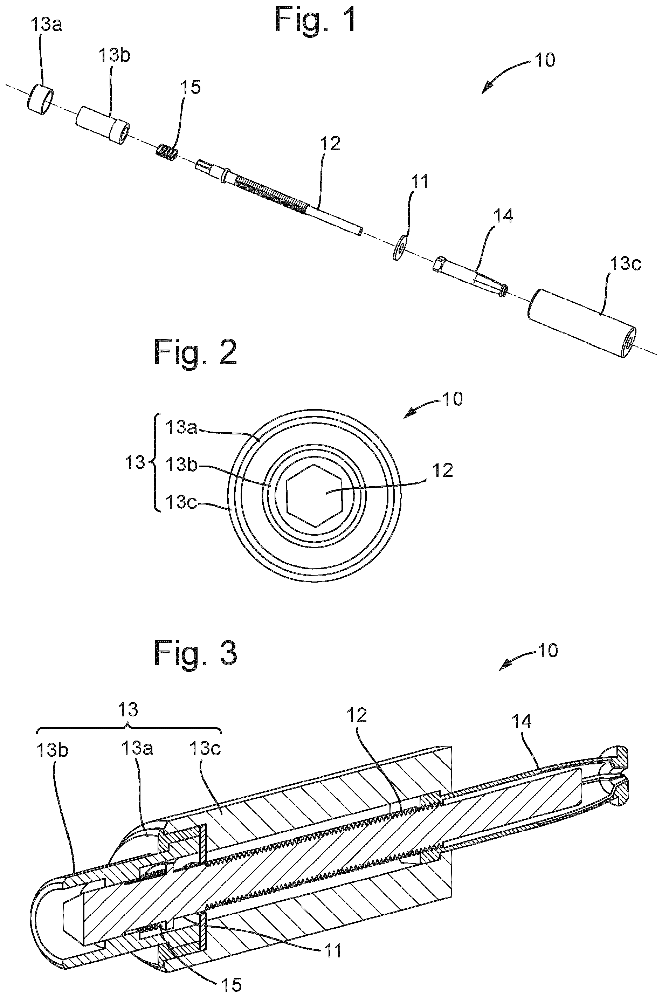

Figure 1 of the accompanying drawings shows a fastener 10 comprising a retaining ring 11, a bolt 12, a first hollow tubular body part 13a, a second hollow tubular body part 13b, a third hollow tubular body part 13c, a hollow leg member 14 and a spring 15. Each of the components has a central axis, about which the component is substantially symmetric. The components are configured to form the fastener 10 when assembled. In some examples, the central axis of each component is aligned when the fastener 10 is assembled. Each of the components has a distal end, defined as the end furthest from the user in normal use, and a proximal end defined as the end closest to the user in normal use. The assembled fastener 10 has a corresponding distal end and proximal end.

The retaining ring 11 has a ring shape with a central opening. In some embodiments, the retaining ring 11 may have a substantially flat profile. In some examples, the retaining ring 11 may be a stamped circlip or a spiral snap ring, e.g. a Spiralox^{®} retaining ring.

The bolt 12 has a substantially cylindrical shape. The bolt 12 has a proximal end and a distal end. The bolt 12 comprises a threaded portion at or near to the proximal end. In some examples, the threaded portion of the bolt 12 may cover at least a portion of a proximal half of the length of the bolt 12. In some embodiments, the bolt 12 may have an external thread. A thread of the threaded portion may extend radially outwards from a central cylindrical portion. Alternatively, the thread may be cut radially inwards into the central cylindrical portion. The threaded portion of the bolt 12 is configured to engage with a threaded portion of the hollow leg member 14.

In some embodiments, the proximal end of the bolt 12 may have a flange. The flange of the bolt 12 may be configured to engage with the ring 11 to limit a position of the bolt 12.

The first hollow tubular body part 13a is configured to form a hollow tubular body 13 with the second hollow tubular body part 13b and the third hollow tubular body part 13c. The first hollow tubular body part 13a may be referred to as a proximal tube. The second hollow tubular body part 13b may be referred to as a rotatable cap. The third hollow tubular body part 13c may be referred to as a distal tube. In some embodiments, any of the first hollow tubular body part 13a, second hollow tubular body part 13b and/or third hollow tubular part 13c may be screwed together. Alternatively, any of the first hollow tubular body part 13a, second hollow tubular body part 13b and/or third hollow tubular part 13c may connected by a press-fit, welding, adhesive any other suitable means. In some embodiments, the hollow tubular body 13 is formed as a single piece.

The hollow tubular body 13 has a proximal end and a distal end. The proximal end may be formed by the second hollow tubular body part 13b and the distal end may be formed by the third hollow tubular body part 13c. The distal end of the hollow tubular body 13 may be a flat surface perpendicular to the central axis or may have a conical (or "countersunk") profile. The hollow tubular body 13 has a central axis. In some embodiments, the central axis of the hollow tubular body 13 defines the central axis of the fastener 10. The hollow tubular body 13 has a central opening extending along the central axis from the proximal end to the distal end. The hollow tubular body 13 is configured to receive the retaining ring 11, the bolt 12, the hollow leg member 14 and the spring 15 within the central opening.

In some embodiments, the first hollow tubular body part 13a may be formed as a cylindrical sleeve configured to retain the second hollow tubular body part 13b within. The second hollow tubular body part 13b may be rotatable with respected to the first hollow tubular body part 13a. In some examples, the bolt 12 may be received within a central opening of the second hollow tubular body part 13b. The bolt 12 may be translatable along the central axis relative to the second hollow tubular body part 13b. In some examples, the bolt 12 may be rotatably coupled with the second hollow tubular body part 13b. For example, a coupling portion of the bolt 12 may have a polygon profile e.g. a hexagonal profile. The central opening of second hollow tubular body part 13b may have a corresponding polygonal profile to rotatably couple the second hollow tubular body part 13b with the bolt 12. In some examples, the coupling portion of the bolt 12 may be formed proximally of the threaded portion of the bolt 12.

The hollow leg member 14 has a hollow, substantially cylindrical form. The hollow leg member 14 has a proximal end and a distal end. The hollow leg member 14 comprises a flange at the proximal end, a threaded portion at the proximal end and a plurality of resilient legs at the distal end. The flange extends radially outwards from the proximal end of the flange. In some embodiments, the flange of the hollow leg member 14 may include a flat surface perpendicular to the central axis of the fastener. The flat surface of the flange may face the distal direction.

Each of the resilient legs of the hollow leg member 14 has a head at the distal end. The head may be formed as a flange portion extending radially outwards from the leg. The head of each leg is configured to engage with a work-piece. For example, the head of each leg may be arranged to engage with a distal side of the work piece. As will be described later, the head may be configured to transfer a compressive force to the work piece.

In some embodiments, the resilient legs of the hollow leg member 14, may be formed to extend distally from the distal end of the hollow leg member 14. Alternatively, the legs may be formed by dividing the distal end of the hollow leg member 14. A portion of material may be removed from the hollow leg member 14 between each of the legs.

Each of the resilient legs of the hollow leg member is biased radially inwards towards the central axis. That is, the distal ends of the resilient legs may be angled or curved radially inwards towards the central axis. The resilient legs may be formed of a resilient material such that each of the legs can be deflected inwards or outwards by a deflecting force. Provided the amount of deflection does not exceed a material limit, the resilient legs may be configured to return to the original biased position if the deflecting force is removed. In some examples, the resilient legs may be biased by, for example, inward deflection of the legs beyond the material limit, or by applying heat treatment while the legs are restrained in the biased position, or by any suitable process.

In some embodiments, the spring 15 may be a compressive spring. In some examples, the spring 4 may an open coil spring, a disc spring, or any other suitably resilient or elastic element. The spring 15 may be configured to fit around the bolt 12.

Figure 2 of the accompanying drawings shows a proximal end view of the fastener 10 in assembled form. As shown, the bolt 12 is arranged within the second hollow tubular body part 13b. The second hollow tubular body part 13b is arranged within the first hollow tubular body part 13a. The first hollow tubular body part 13a is arranged within the third hollow tubular body part 13c. In some examples, the proximal end of the bolt 12 may include an engaging element configured to engage with a rotary tool. For example, the head of the bolt 12 may be formed with a polygonal, e.g. hexagonal (as shown) or square, shape for engagement with a wrench, or may include a socket or recess having a shape for engagement with a socket wrench, key, or screwdriver e.g. a hexagonal, triangular, square, linear, cross or star shaped recess.

Figure 3 of the accompanying drawings shows the fastener 10 in assembled form. As shown, the central axis of each component is aligned when the fastener 10 is assembled.

As shown, the first hollow tubular body part 13a may form a hollow tubular body 13 with the second hollow tubular body part 13b and the third hollow tubular body part 13c. The first hollow tubular body part 13a and third hollow tubular body part 13c may be connected by a press-fit or, alternatively, may be screwed together. The second hollow tubular body part 13b may be held in position by the first hollow tubular body part 13a, e.g. by a flange or lip. The second hollow tubular body part 13b may be rotatable with respect to the first hollow tubular body part 13a

The hollow tubular body 13 has a proximal end and a distal end. The proximal end may be formed by the second hollow tubular body part 13b and the distal end may be formed by the third hollow tubular body part 13c. The distal end of the hollow tubular body 13 may be a flat surface perpendicular to the central axis or may have a conical (or "countersunk") profile. The hollow tubular body 13 has a central axis. In some embodiments, the central axis of the hollow tubular body 13 defines the central axis of the fastener 10. The hollow tubular body 13 has a central opening extending along the central axis from the proximal end to the distal end. As shown, each of the retaining ring 11, the bolt 12, the hollow leg member 14 and the spring 15 are at least partially received within the central opening.

The bolt 12 has a substantially cylindrical form. As shown, the bolt 12 may be arranged within the central opening of the hollow tubular body 13. The bolt 12 may extend by a distance beyond the distal end of the hollow tubular body 13. In some examples, the proximal end (or "head") of the bolt 12 may protrude from the proximal end of the hollow tubular body 13. Alternatively, the head of the bolt 12 may be within the proximal end of the central opening.

In some embodiments, the proximal end of the bolt 12 may have a flange. The flange may be formed to extend radially outwards from the cylindrical body of the bolt 12.

In some embodiments, the hollow tubular body 13 may have a retaining means configured to engage with the flange of the bolt 12 and block the bolt 12 from moving in a distal direction. For example, the second hollow tubular body part 13b may comprise a lip extending radially inwards into the central opening at or near the distal end of the second hollow tubular body part 13b. In some embodiments, as shown, the retaining means may be provided by the retaining ring 11.

The retaining ring 11 has a ring shape with a central opening. In some embodiments, the retaining ring 11 may have a substantially flat profile. In some examples, the retaining ring 11 may be a stamped circlip or a spiral snap ring, e.g. a Spiralox retaining ring. As shown, the hollow tubular body 13 may comprise a retaining groove arranged to receive the retaining ring 2. The retaining groove may be positioned between the first and/or second hollow tubular body parts 13a, 13b and the third hollow tubular body part 13c.

The flange of the bolt 12 may be configured to engage with the ring 11 to limit a position of the bolt 12. The central opening of the ring 11 may be formed to fit around the cylindrical body of the bolt 12. The flange of the bolt 12 may be foamed with a diameter, which is larger than the central opening of the ring 11. The ring 11 may be positioned around the cylindrical body of the bolt 12, distally from the flange of the bolt 12. The ring 11 may engage with the flange of the bolt 12 to block the bolt 12 from movement in a distal direction.

The hollow tubular body 13 comprises a stop surface extending radially inwards at the proximal end. For example, the second hollow tubular body part 13b may be formed with a lip extending radially inwards into the central opening of the hollow tubular body 13. In some examples, a shoulder or step profile may be formed to extend radially inwards into the central opening of the hollow tubular body 13. In some embodiments, the stop surface of the hollow tubular body 13 may have be formed as a flat surface of the step profile extending perpendicular to the central axis of the fastener. The flat surface of the stop portion may face the distal direction.

The spring 15 is arranged between the flange of the bolt 12 and the stop surface of the hollow tubular body 13. In some embodiments, the spring 15 may be a compressive spring. In some examples, the spring 15 may an open coil spring, a disc spring, or any other suitably resilient or elastic element. The spring 15 may be configured to fit around a cylindrical portion of the bolt 12 and abut with the proximally facing flat surface of the flange. The spring 15 is configured to urge the bolt 12 in a distal direction with respect to the hollow tubular body 13. The spring 15 is configured to exert a force on the proximally facing flat surface of the bolt 12 and distally facing stop surface of the hollow tubular body 13.

In this way, the spring 15 and/or the stop surface of the hollow tubular body 13 may be configured to block the bolt 12 from moving in the proximal direction.

The bolt 12 comprises a threaded portion at the proximal end. In some embodiments, the bolt 12 may have an external thread. A thread of the threaded portion may extend radially outwards from a central cylindrical portion. Alternatively, the thread may be cut radially inwards into the central cylindrical portion. The threaded portion of the bolt 12 is configured to engage with a threaded portion of the hollow leg member 14.

The hollow leg member 14 has a hollow, substantially cylindrical form. The hollow leg member comprises a plurality of resilient legs at the distal end. In some embodiments, the resilient legs of the hollow leg member 14, may be formed to extend distally from the distal end of the hollow leg member 14. Alternatively, the legs may be formed by dividing the distal end of the hollow leg member 14. A portion of material may be removed from the hollow leg member 14 between each of the legs.

As shown, the hollow leg member 14 may be arranged within the central opening of the hollow tubular body 13. The hollow leg member 14 may extend by a distance beyond the distal end of the hollow tubular body 13. The hollow leg member is translatable within the hollow tubular body 13 along the central axis of the hollow tubular body 13.

The hollow leg member 14 comprises a flange at the proximal end. The flange extends radially outwards from the proximal end of the flange. In some embodiments, the flange of the hollow leg member 14 may include a flat surface perpendicular to the central axis of the fastener. The flat surface of the flange may face the distal direction.

In some examples, the hollow tubular body 13 may comprise a stop portion extending radially inwards at the distal end. For example, the third hollow tubular body part 13c may be formed with a lip extending radially inwards into the central opening of the hollow tubular body 13. In some embodiments, the stop portion of the hollow tubular body 13 may have a flat surface perpendicular to the central axis of the fastener. The flat surface of the stop portion may face the proximal direction. The stop portion of the hollow tubular body 13 may engage with the flange of the hollow leg member 14 to block the hollow leg member 14 from movement in the distal direction.

Each of the resilient legs of the hollow leg member 14 is biased radially inwards towards the central axis. That is, the distal ends of the resilient legs may be angled or curved radially inwards towards the central axis. In some examples, the resilient legs may be biased by, for example, inward deflection of the legs beyond the material limit, or by applying heat treatment while the legs are restrained in the biased position, or by any suitable process. As shown, a portion of the resilient legs, which extends beyond the distal end of the bolt 12 may be angled or curved radially inwards. In some embodiments, the distal ends of the legs may extend beyond the distal end of the bolt 12 when the hollow leg member 14 is in the most distal position, as shown in Fig. 3.

The hollow leg member 14 comprises a threaded portion at the proximal end. In some embodiments, the hollow leg member 14 may have an internal thread. For example, the hollow leg member 14 may include a thread extending radially inwards from an inner wall of the hollow cylindrical form. Alternatively, the thread may be cut radially outwards into the inner wall of the hollow cylindrical form.

The threaded portion of the bolt 12 is configured to engage with a threaded portion of the hollow leg member 14. In this way, rotation of the bolt 12 in a first direction draws the hollow leg member 14 in a proximal direction along the central axis. The first direction may be referred to as a fastening, tightening or clamping direction. In some examples, the first direction may be clockwise from the perspective of the user. Alternatively, the first direction may be anti-clockwise. By rotation of the bolt 12 in the first direction, the hollow leg member 14 may be translated in a proximal direction relative to the bolt 12. The hollow leg member 14 may also be translated in a proximal direction relative to the hollow tubular body 13. In some examples, the hollow leg member 14 may be drawn further within the central opening of the hollow tubular body 13. In some examples, the resilient legs of the hollow leg member 14 may be moved in a proximal direction towards or past the distal end of the hollow tubular body 13.

Rotation of the bolt 12 in a second direction opposite to the first direction is configured to translate the hollow leg member 14 in a distal direction along the central axis. The second direction may be referred to as an unfastening, loosening or detaching direction. In some examples, where the first direction is clockwise from the perspective of the user, the second direction may be anti-clockwise and vice versa. By rotation of the bolt 12 in the second direction, the hollow leg member 14 may be translated in a distal direction relative to the bolt 12. The hollow leg member 14 may also be translated in a distal direction relative to the hollow tubular body 13. In some examples, the hollow leg member 14 may be pushed further out of the central opening of the hollow tubular body 13. In some examples, the resilient legs of the hollow leg member 14 may be moved in a distal direction away from the distal end of the hollow tubular body 13.

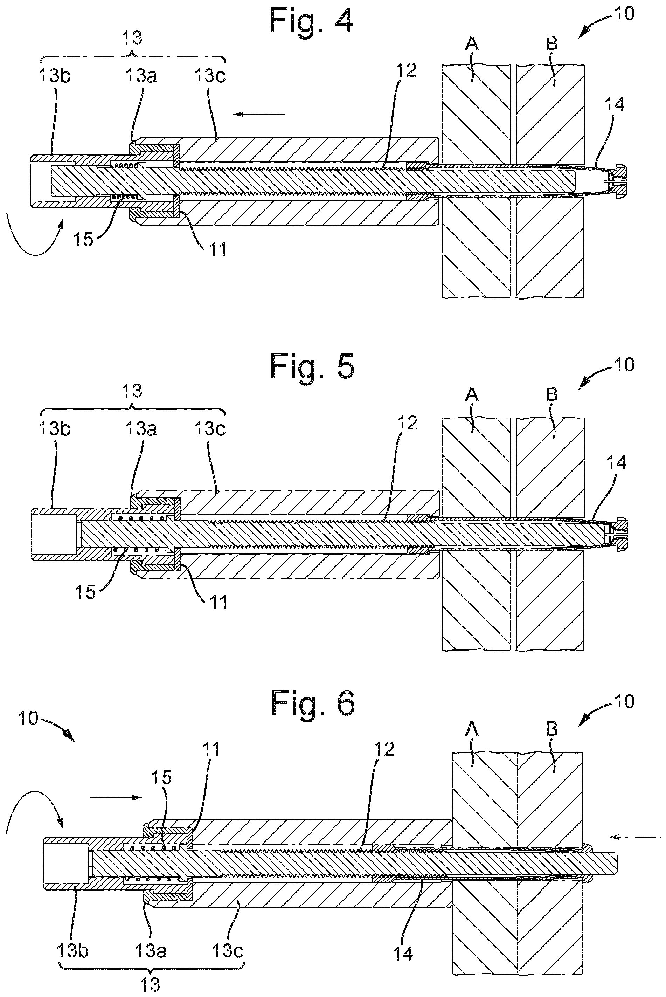

Figure 4 of the accompanying drawings shows the fastener 10 in an initial configuration, e.g. after rotation of the bolt 12 in the second direction. As shown, the fastener 10 is in position to clamp a workpiece with two parts, A and B. An opening is prepared through part A and part B.

After rotation of the bolt 12 in the second direction the hollow leg member 14 is translated in a distal direction relative to the bolt 12. As shown, the hollow leg member 14 is in the most distal position. The resilient legs of the hollow leg member 14 extend beyond the distal end of the bolt 12. Each of the resilient legs of the hollow leg member 14 is biased radially inwards towards the central axis. In this position, the distal end of the bolt 12 does not urge the resilient legs of the hollow leg member radially outwards. As shown, a portion of the resilient legs, which extends beyond the distal end of the bolt 12 may be angled or curved radially inwards. In this way, the head at the distal end of each resilient leg can pass through the openings in the work piece. The hollow leg member 14 can pass through the opening, but the hollow tubular body 13 is larger than the opening. A distal face of the hollow tubular body 13 abuts with a proximal face of part A.

Rotation in the second direction causes the threaded portion of the bolt 12 to disengage from the threaded portion of the hollow leg portion 14. As the threaded portion of the hollow leg member 14 is at the proximal end of the hollow leg member 14, the threaded portion of the bolt 12 may be translated proximally out of the threaded portion of the hollow leg member 14. The bolt 12 may be translatable in a distal direction along the central axis. In this way, the threaded portion of the bolt 12 can be disengaged from the threaded portion of the hollow leg member 14. In this configuration, the bolt 12 can be freely rotated in the second direction. In this way, damage caused to the fastener by over-rotation of the bolt 12 in the second direction can be avoided.

The spring 15 is configured to urge the bolt 12 in a distal direction with respect to the hollow tubular body 13. Further rotation of the bolt 12 in the second direction may push the bolt 12 proximally against the spring 15, compressing the spring 15 as shown. The spring 15 may maintain a contact between the thread of the bolt 12 and the thread of the hollow leg member 14. A user with a manual rotary tool may feel a clicking sensation when further rotating the bolt 12 in the second direction. According to the invention, the spring 15 is configured to urge the bolt 12 into a position of engagement. In the position of engagement, the threaded portion of the bolt 12 is engaged with the threaded portion of the hollow leg member 14.

Figure 5 of the accompanying drawings shows the fastener 10 in a configuration with the bolt 12 in the position of engagement.

The spring 15 urges the bolt 12 in a distal direction relative to the hollow tubular body 13. In the position of engagement, rotation of the bolt 12 in the first direction may cause the threaded portion of the bolt 12 to engage with the threaded portion of the hollow leg member 14. In this way, the spring 15 can cause immediate engagement of the threads when required. For example, the spring 15 causes engagement of the threaded portion of the bolt 12 with the threaded portion of the hollow leg member 14. As such, there is no free movement or 'float' along the central axis between the threaded portions. Movement of the bolt 12 with respect to the hollow tubular body 13 is not required to engage the threads. Rotation of the bolt 12 in the first direction will immediately engage the threaded portions. In addition, there is no free movement of the bolt 12 with respect to the hollow tubular body 13. In this way, there is no movement or 'float' in the distal end of the bolt 12, relative to the hollow tubular body 13. As such, the fastener 10 can enable an automated system to more efficiently locate the head of the bolt 12, and engage a rotary tool to tighten the fastener 10.

Figure 6 of the accompanying drawings shows the fastener 10 after rotation of the bolt 12 in the first direction. The fastener 10 is shown in a fully clamped position. As shown, the hollow leg member 14 is translated in a proximal direction relative to the bolt 12. The resilient legs of the hollow leg member 14 do not extend beyond the distal end of the bolt 12. In this position, the distal end of the bolt 12 is configured to urge the resilient legs of the hollow leg member radially outwards. A compressive force is applied between a distal face of the hollow tubular body 13 and a proximally facing flat surface formed on the resilient legs of the hollow leg member 14.

In some embodiments, the resilient legs may be formed of a resilient material such that each of the legs can be deflected inwards or outwards by a deflecting force, e.g. by the bolt 12. Provided the amount of deflection does not exceed a material limit, the resilient legs may be configured to return to the original biased position if the deflecting force is removed.

Each of the resilient legs of the hollow leg member 14 has a head at the distal end. The head may be formed as a flange portion extending radially outwards from the leg. As shown, when the resilient legs are deflected outwards by the bolt 12, the head of each leg may protrude outwards beyond the radial extent of the hollow leg member 14. The head of each leg may protrude outwards beyond the opening in part B. In this configuration, the fastener 10 cannot be withdrawn from the workpiece.

The head of each leg is configured to engage with a work-piece. For example, the head of each leg may be arranged to engage with a distal side of the work piece. In some examples, the flange portion forming the head of each leg may include a flat surface, which is presented perpendicular to the central axis and proximally facing when the hollow leg member 14 is in the position shown. The flat surface may be arranged to abut with the distal face of part B and transfer a compressive force to part B.

The spring 15 causes engagement of the threaded portion of the bolt 12 with the threaded portion of the hollow leg member 14, such that rotation of the bolt 12 in the first direction will immediately engage the threaded portions. In this way, a grip range of the fastener 10 can be improved. As soon as the head of each resilient leg can engage a distal face of the work piece, each head exert a compressive force on the work piece. This compressive force can be applied from virtually the most distal position of the hollow leg member 14, as the threaded portions of the fastener 10 are engaged by the spring 15.

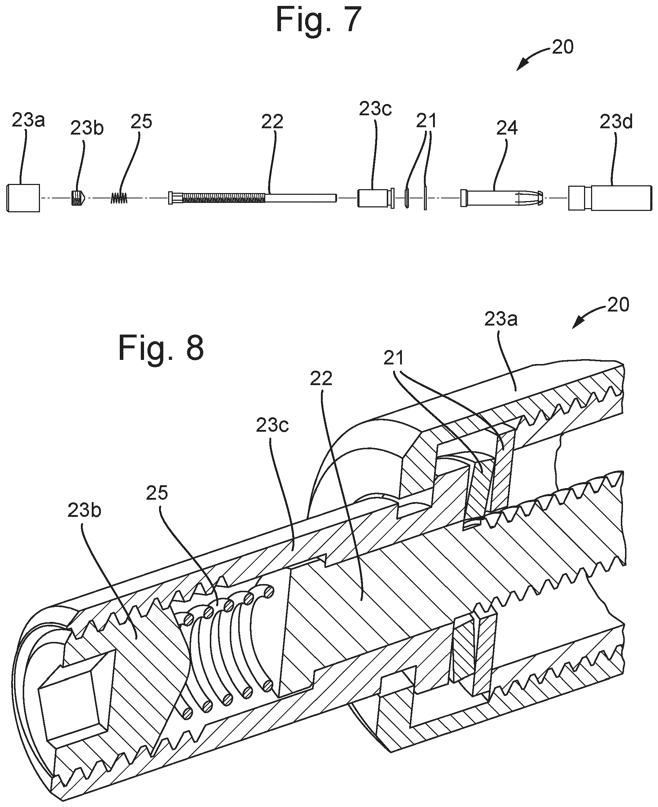

Figure 7 of the accompanying drawings shows a fastener 20 comprising a retaining ring 21, a bolt 22, a first hollow tubular body part 23a, a second hollow tubular body part 23b, a third hollow tubular body part 23c, a fourth hollow tubular body part 23d, a hollow leg member 24 and a spring 25. Each of the components has a central axis, about which the component is substantially symmetric. The components are configured to form the fastener 20 when assembled. In some examples, the central axis of each component is aligned when the fastener 20 is assembled. Each of the components has a distal end, defined as the end furthest from the user in normal use, and a proximal end defined as the end closest to the user in normal use. The assembled fastener 20 has a corresponding distal end and proximal end.

The retaining ring 21 has a ring shape with a central opening. In some embodiments, the retaining ring 21 may have a substantially flat profile. In some examples, the retaining ring 21 may be formed as a disc spring, a flat coil spring, a stamped circlip or a spiral snap ring, or any combination of one or more such elements in combination.

The bolt 22 has a substantially cylindrical shape. The bolt 22 has a proximal end and a distal end. The bolt 22 comprises a threaded portion at or near to the proximal end. In some examples, the threaded portion of the bolt 22 may cover at least a portion of a proximal half of the length of the bolt 22. In some embodiments, the bolt 22 may have an external thread. A thread of the threaded portion may extend radially outwards from a central cylindrical portion. Alternatively, the thread may be cut radially inwards into the central cylindrical portion. The threaded portion of the bolt 22 is configured to engage with a threaded portion of the hollow leg member 24.

In some embodiments, the proximal end of the bolt 22 may have a flange. The flange of the bolt 22 may be configured to engage with the third hollow tubular body part 23c to limit a position of the bolt 22.

The first hollow tubular body part 23a is configured to form a hollow tubular body 23 with the third hollow tubular body part 23c and the fourth hollow tubular body part 23d. The first hollow tubular body part 23a may be referred to as a proximal tube. The fourth hollow tubular body part 23d may be referred to as a distal tube. In some embodiments, any of the first hollow tubular body part 23a, second hollow tubular body part 23b, third hollow tubular body part 23c and/or third hollow tubular part 13c may be screwed together. Alternatively, any of the first hollow tubular body part 23a, third hollow tubular body part 23c and/or third hollow tubular part 13c may connected by a press-fit, welding, adhesive any other suitable means. In some embodiments, the hollow tubular body 23 is formed as a single piece.

The hollow tubular body 23 has a proximal end and a distal end. The proximal end may be formed by the third hollow tubular body part 23c and the distal end may be formed by the fourth hollow tubular body part 23d. The distal end of the hollow tubular body 23 may be a flat surface perpendicular to the central axis or may have a conical (or "countersunk") profile. The hollow tubular body 23 has a central axis. In some embodiments, the central axis of the hollow tubular body 23 defines the central axis of the fastener 20. The hollow tubular body 23 has a central opening extending along the central axis from the proximal end to the distal end. The hollow tubular body 23 is configured to received the retaining ring 21, the bolt 22, the hollow leg member 24 and the spring 25 within the central opening.

The second hollow tubular body part 23b and third hollow tubular body part 23c may form a rotatable cap. In some examples, the third hollow tubular body part 23c may have a substantially cylindrical form. The second hollow tubular body part 23b may be formed to fit within the proximal end of the third hollow tubular body part 23c. The second hollow tubular body part 23b may fill or otherwise block the central opening of the hollow tubular body 23. The second hollow tubular body part 23b may form an end wall of the hollow tubular body 23.

The hollow leg member 24 has a hollow, substantially cylindrical form. The hollow leg member 24 has a proximal end and a distal end. The hollow leg member 24 comprises a flange at the proximal end, a threaded portion at the proximal end and a plurality of resilient legs at the distal end. The flange extends radially outwards from the proximal end of the flange. In some embodiments, the flange of the hollow leg member 24 may include a flat surface perpendicular to the central axis of the fastener. The flat surface of the flange may face the distal direction.

Each of the resilient legs of the hollow leg member 24 has a head at the distal end. The head may be formed as a flange portion extending radially outwards from the leg. The head of each leg is configured to engage with a work-piece. For example, the head of each leg may be arranged to engage with a distal side of the work piece. As will be described later, the head may be configured to transfer a compressive force to the work piece.

In some embodiments, the resilient legs of the hollow leg member 24, may be formed to extend distally from the distal end of the hollow leg member 24. Alternatively, the legs may be formed by dividing the distal end of the hollow leg member 24. A portion of material may be removed from the hollow leg member 24 between each of the legs.

Each of the resilient legs of the hollow leg member is biased radially inwards towards the central axis. That is, the distal ends of the resilient legs may be angled or curved radially inwards towards the central axis. The resilient legs may be formed of a resilient material such that each of the legs can be deflected inwards or outwards by a deflecting force. Provided the amount of deflection does not exceed a material limit, the resilient legs may be configured to return to the original biased position if the deflecting force is removed. In some examples, the resilient legs may be biased by, for example, inward deflection of the legs beyond the material limit, or by applying heat treatment while the legs are restrained in the biased position, or by any suitable process.

In some embodiments, the spring 25 may be a compressive spring. In some examples, the spring 4 may an open coil spring, a disc spring, or any other suitably resilient or elastic element.

Figure 8 of the accompanying drawings shows the fastener 20 in assembled form. As shown, the central axis of each component is aligned when the fastener 20 is assembled.

As shown, the first hollow tubular body part 23a may form a hollow tubular body 23 with the second hollow tubular body part 23b, third hollow tubular body part 23c and the fourth hollow tubular body part 23d. The first hollow tubular body part 23a and fourth hollow tubular body part 23d may be connected by a press-fit or, alternatively, may be screwed together. The third hollow tubular body part 23c may be held in position by the first hollow tubular body part 23a, e.g. by a flange or lip. The third hollow tubular body part 23c may be rotatable with respect to the first hollow tubular body part 23a

The hollow tubular body 23 has a proximal end and a distal end. The proximal end may be formed by the third hollow tubular body part 23c and the distal end may be formed by the fourth hollow tubular body part 23d. The distal end of the hollow tubular body 23 may be a flat surface perpendicular to the central axis or may have a conical (or "countersunk") profile. The hollow tubular body 23 has a central axis. In some embodiments, the central axis of the hollow tubular body 23 defines the central axis of the fastener 20. The hollow tubular body 23 has a central opening extending along the central axis from the proximal end to the distal end. As shown, each of the retaining ring 21, the bolt 22, the hollow leg member 24 and the spring 25 are at least partially received within the central opening.

The bolt 22 has a substantially cylindrical form. As shown, the bolt 22 may be arranged within the central opening of the hollow tubular body 23. The bolt 22 may extend by a distance beyond the distal end of the hollow tubular body 23. In some examples, the proximal end of the bolt 22 may be within the proximal end of the central opening. In some embodiments, the proximal end of the bolt 22 may have a flange. The flange may be formed to extend radially outwards from the cylindrical body of the bolt 22. In some embodiments, the proximal end face of the bolt 22 may form a proximally-facing stop surface.

In some embodiments, the hollow tubular body 23 may have a retaining means configured to engage with the flange of the bolt 22 and block the bolt 22 from moving in a distal direction. For example, the third hollow tubular body part 23c may have a shoulder arranged to block the bolt 22 from moving in a distal direction. The shoulder may be formed to extend radially inwards into the central opening of the hollow tubular body 23. The shoulder may be arranged to engage with the flange of the bolt 22, to fix the bolt in position with respect to the hollow tubular body 23.

As shown, the second hollow tubular body part 23b and third hollow tubular body part 23c may form a rotatable cap. In some examples, the third hollow tubular body part 23c may have a substantially cylindrical form. The second hollow tubular body part 23b may be formed to fit within the proximal end of the third hollow tubular body part 23c. The second hollow tubular body part 23b may fill or otherwise block the central opening of the hollow tubular body 23.

The second hollow tubular body part 23b may form an end wall closing the hollow tubular body 23. In some examples, a proximally facing outer face of the end wall may include an engaging element configured to engage with a rotary tool. For example, the second hollow tubular body part 23b may be formed with a polygonal, e.g. hexagonal or square, shape for engagement with a wrench, or may include a socket or recess (as shown) having a shape for engagement with a socket wrench, key, or screwdriver e.g. a hexagonal, triangular, square, linear, cross or star shaped recess. In some examples, an inner face of the end wall may form a distally-facing stop surface. In some examples, the inner face may be flat or may be shaped to correspond with the spring 25. For example, the inner face may include a cone-shaped profile or a grooved profile to maintain the spring 25 in a centred position.

The spring 25 is arranged between the proximally-facing stop surface of the bolt 22 and the distally-facing stop surface of the second hollow tubular body part 23b. In some embodiments, the spring 25 may be a compressive spring. In some examples, the spring 25 may an open coil spring, a disc spring, or any other suitably resilient or elastic element. The spring 25 is configured to urge the bolt 22 in a distal direction with respect to the hollow tubular body 23. The spring 25 is configured to exert a force on the proximally facing flat surface of the bolt 22 and distally facing stop surface of the hollow tubular body 23.

In this way, the spring 25 and/or the stop surface of the hollow tubular body 23 may be configured to block the bolt 22 from moving in the proximal direction.

The bolt 22 comprises a threaded portion at the proximal end. In some embodiments, the bolt 22 may have an external thread. A thread of the threaded portion may extend radially outwards from a central cylindrical portion. Alternatively, the thread may be cut radially inwards into the central cylindrical portion. The threaded portion of the bolt 22 is configured to engage with a threaded portion of the hollow leg member 24.

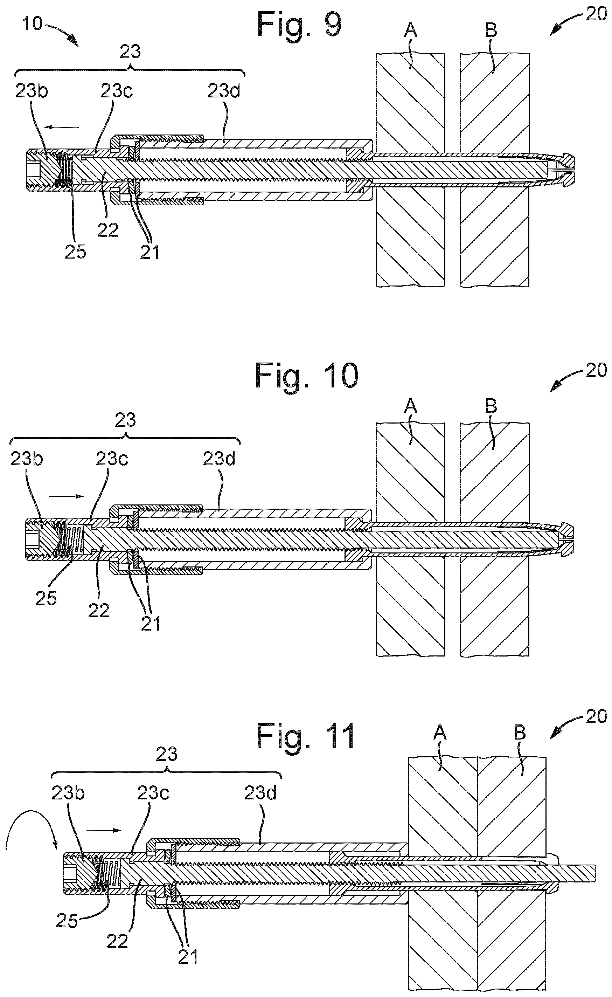

Figure 9 of the accompanying drawings shows the fastener 20 in an initial configuration. As shown, the fastener 20 is in position to clamp a workpiece with two parts, A and B. An opening is prepared through part A and part B.

As shown, the hollow leg member 24 may be arranged within the central opening of the hollow tubular body 23. The hollow leg member 24 has a hollow, substantially cylindrical form. The hollow leg member comprises a plurality of resilient legs at the distal end. In some embodiments, the resilient legs of the hollow leg member 24, may be formed to extend distally from the distal end of the hollow leg member 24. Alternatively, the legs may be formed by dividing the distal end of the hollow leg member 24. A portion of material may be removed from the hollow leg member 24 between each of the legs.

The hollow leg member 24 may extend by a distance beyond the distal end of the hollow tubular body 23. The hollow leg member is translatable within the hollow tubular body 23 along the central axis of the hollow tubular body 23. The hollow leg member 24 comprises a flange at the proximal end. The flange extends radially outwards from the proximal end of the flange. In some embodiments, the flange of the hollow leg member 24 may include a flat surface perpendicular to the central axis of the fastener. The flat surface of the flange may face the distal direction.

In some examples, the hollow tubular body 23 may comprise a stop portion extending radially inwards at the distal end. For example, the fourth hollow tubular body part 23d may be formed with a lip extending radially inwards into the central opening of the hollow tubular body 23. In some embodiments, the stop portion of the hollow tubular body 23 may have a flat surface perpendicular to the central axis of the fastener. The flat surface of the stop portion may face the proximal direction. The stop portion of the hollow tubular body 23 may engage with the flange of the hollow leg member 24 to block the hollow leg member 24 from movement in the distal direction.

As shown, the hollow leg member 24 is in the most distal position. The resilient legs of the hollow leg member 24 extend beyond the distal end of the bolt 22. Each of the resilient legs of the hollow leg member 24 is biased radially inwards towards the central axis. In this position, the distal end of the bolt 22 does not urge the resilient legs of the hollow leg member radially outwards. The distal ends of the resilient legs may be angled or curved radially inwards towards the central axis. In some examples, the resilient legs may be biased by, for example, inward deflection of the legs beyond the material limit, or by applying heat treatment while the legs are restrained in the biased position, or by any suitable process.

As shown, a portion of the resilient legs extends beyond the distal end of the bolt 22 may be angled or curved radially inwards. In this way, the head at the distal end of each resilient leg can pass through the openings in the work piece. The hollow leg member 24 can pass through the opening, but the hollow tubular body 23 is larger than the opening. A distal face of the hollow tubular body 23 abuts with a proximal face of part A.

The hollow leg member 24 comprises a threaded portion at the proximal end. In some embodiments, the hollow leg member 24 may have an internal thread. For example, the hollow leg member 24 may include a thread extending radially inwards from an inner wall of the hollow cylindrical form. Alternatively, the thread may be cut radially outwards into the inner wall of the hollow cylindrical form.

The threaded portion of the bolt 22 is configured to engage with a threaded portion of the hollow leg member 24. In this way, rotation of the bolt 22 in a first direction draws the hollow leg member 24 in a proximal direction along the central axis. The first direction may be referred to as a fastening, tightening or clamping direction. In some examples, the first direction may be clockwise from the perspective of the user. Alternatively, the first direction may be anti-clockwise. By rotation of the bolt 22 in the first direction, the hollow leg member 24 may be translated in a proximal direction relative to the bolt 22. The hollow leg member 24 may also be translated in a proximal direction relative to the hollow tubular body 23. In some examples, the hollow leg member 24 may be drawn further within the central opening of the hollow tubular body 23. In some examples, the resilient legs of the hollow leg member 24 may be moved in a proximal direction towards or past the distal end of the hollow tubular body 23.

Rotation of the bolt 22 in a second direction opposite to the first direction is configured to translate the hollow leg member 24 in a distal direction along the central axis. The second direction may be referred to as an unfastening, loosening or detaching direction. In some examples, where the first direction is clockwise from the perspective of the user, the second direction may be anti-clockwise and vice versa. By rotation of the bolt 22 in the second direction, the hollow leg member 24 may be translated in a distal direction relative to the bolt 22. The hollow leg member 24 may also be translated in a distal direction relative to the hollow tubular body 23. In some examples, the hollow leg member 24 may be pushed further out of the central opening of the hollow tubular body 23. In some examples, the resilient legs of the hollow leg member 24 may be moved in a distal direction away from the distal end of the hollow tubular body 23.

Rotation in the second direction causes the threaded portion of the bolt 22 to disengage from the threaded portion of the hollow leg portion 14. As the threaded portion of the hollow leg member 24 is at the proximal end of the hollow leg member 24, the threaded portion of the bolt 22 may be translated proximally out of the threaded portion of the hollow leg member 24. The bolt 22 may be translatable in a distal direction along the central axis. In this way, the threaded portion of the bolt 22 can be disengaged from the threaded portion of the hollow leg member 24. In this configuration, the bolt 22 can be freely rotated in the second direction. In this way, damage caused to the fastener by over-rotation of the bolt 22 in the second direction can be avoided.

The spring 25 is configured to urge the bolt 22 in a distal direction with respect to the hollow tubular body 23. Further rotation of the bolt 22 in the second direction may push the bolt 22 proximally against the spring 25, compressing the spring 25 as shown. The spring 25 may maintain a contact between the thread of the bolt 22 and the thread of the hollow leg member 24. A user with a manual rotary tool may feel a clicking sensation when further rotating the bolt 22 in the second direction. According to the invention, the spring 25 is configured to urge the bolt 22 into a position of engagement. In the position of engagement, the threaded portion of the bolt 22 is engaged with the threaded portion of the hollow leg member 24.

Figure 10 of the accompanying drawings shows the fastener 20 in a configuration with the bolt 22 in the position of engagement.

The spring 25 urges the bolt 22 in a distal direction relative to the hollow tubular body 23. In the position of engagement, rotation of the bolt 22 in the first direction may cause the threaded portion of the bolt 22 to engage with the threaded portion of the hollow leg member 24. In this way, the spring 25 can cause immediate engagement of the threads when required. For example, the spring 25 causes engagement of the threaded portion of the bolt 22 with the threaded portion of the hollow leg member 24. As such, there is no free movement or 'float' along the central axis between the threaded portions. Movement of the bolt 22 with respect to the hollow tubular body 23 is not required to engage the threads. Rotation of the bolt 22 in the first direction will immediately engage the threaded portions. In addition, there is no free movement of the bolt 22 with respect to the hollow tubular body 23. In this way, there is no movement or 'float' in the distal end of the bolt 22, relative to the hollow tubular body 23. As such, the fastener 20 can enable an automated system to more efficiently locate the head of the bolt 22, and engage a rotary tool to tighten the fastener 20.

Figure 11 of the accompanying drawings shows the fastener 20 after rotation of the bolt 22 in the first direction. The fastener 20 is shown in a fully clamped position. As shown, the hollow leg member 24 is translated in a proximal direction relative to the bolt 22. The resilient legs of the hollow leg member 24 do not extend beyond the distal end of the bolt 22. In this position, the distal end of the bolt 22 is configured to urge the resilient legs of the hollow leg member radially outwards. A compressive force is applied between a distal face of the hollow tubular body 23 and a proximally facing flat surface formed on the resilient legs of the hollow leg member 24.

In some embodiments, the resilient legs may be formed of a resilient material such that each of the legs can be deflected inwards or outwards by a deflecting force, e.g. by the bolt 22. Provided the amount of deflection does not exceed a material limit, the resilient legs may be configured to return to the original biased position if the deflecting force is removed.

Each of the resilient legs of the hollow leg member 24 has a head at the distal end. The head may be formed as a flange portion extending radially outwards from the leg. As shown, when the resilient legs are deflected outwards by the bolt 22, the head of each leg may protrude outwards beyond the radial extent of the hollow leg member 24. The head of each leg may protrude outwards beyond the opening in part B. In this configuration, the fastener 20 cannot be withdrawn from the workpiece.

The head of each leg is configured to engage with a work-piece. For example, the head of each leg may be arranged to engage with a distal side of the work piece. In some examples, the flange portion forming the head of each leg may include a flat surface, which is presented perpendicular to the central axis and proximally facing when the hollow leg member 24 is in the position shown. The flat surface may be arranged to abut with the distal face of part B and transfer a compressive force to part B.

The spring 25 causes engagement of the threaded portion of the bolt 22 with the threaded portion of the hollow leg member 24, such that rotation of the bolt 22 in the first direction will immediately engage the threaded portions. In this way, a grip range of the fastener 20 can be improved. As soon as the head of each resilient leg can engage a distal face of the work piece, each head exert a compressive force on the work piece. This compressive force can be applied from virtually the most distal position of the hollow leg member 24, as the threaded portions of the fastener 20 are engaged by the spring 25.

Although aspects of the invention herein have been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the invention as defined by the appended claims.

## Claims

1. A fastener (10, 20) comprising;
a hollow tubular body (13, 23) with a proximal end and a distal end and a central axis, comprising a distally-facing stop surface at the proximal end,
a hollow leg member (14, 24) having a proximal end and a distal end, the leg member being translatable within the body along the central axis of the body, the leg member having a threaded portion at the proximal end and a plurality of resilient legs at the distal end and wherein each leg has a head at the distal end for engaging with a work-piece, and each leg is biased radially inwards towards the central axis,
a bolt (12, 22) having a proximal end and a distal end, the bolt being translatable within the body along the central axis of the body, with a proximally-facing stop surface at the proximal end and a threaded portion at the proximal end for engaging with the threaded portion of the hollow leg member, such that rotation of the bolt in one direction draws the hollow leg member in a proximal direction along the central axis and rotation in the other direction causes the threaded portion of the hollow leg portion to disengage from the threaded portion of the bolt, wherein the distal end of the bolt is configured to urge the legs radially outward; and
a spring (15, 25) arranged between the proximally-facing stop surface of the bolt and the distally-facing stop surface of the hollow tubular body, and configured to urge the bolt in a distal direction with respect to the hollow tubular body, **characterized in that** the spring is configured to urge the bolt into a position of engagement in which the threaded portion of the hollow leg member is engaged with the threaded portion of the bolt.

2. The fastener of claim 1, wherein the proximal end of the hollow tubular body is closed by an end wall and the distally-facing stop surface is formed by an inner face of the end wall.

3. The fastener of claim 1, wherein the distally-facing stop surface is formed by a step profile extending radially inwards from the hollow tubular body.

4. The fastener of any preceding claim, wherein the hollow tubular body comprises a rotatable cap (13b, 23b, 23c) at the proximal end, including the distally-facing stop surface, wherein the bolt is translatable with respect to the cap and rotatably coupled to rotate with the cap.

5. The fastener of any preceding claim, wherein the hollow tubular body comprises a stop portion extending radially inwards at the distal end, and the leg member comprises a flange at the proximal end.

6. The fastener of claim 5, wherein the flange of the hollow leg member includes a flat surface perpendicular to the central axis of the fastener and the stop portion of the hollow tubular body has a corresponding flat surface perpendicular to the central axis of the fastener.

7. The fastener of any preceding claim, wherein the distal ends of the legs extend beyond the distal end of the bolt when the hollow leg member is in the most distal position.

8. The fastener of any preceding claim, wherein the proximal end of the bolt has a flange extending radially outwards and configured to fix the bolt in position with respect to the hollow body member, and the hollow body member has a shoulder arranged to block the bolt from moving in a distal direction.

9. The fastener of claim 8, wherein the flange of the bolt includes the proximally-facing stop surface of the bolt.

10. The fastener of any one of claims 1 to 8, wherein the proximally-facing stop surface of the bolt is formed by a proximal end face of the bolt.

11. The fastener of any preceding claim, wherein the hollow leg member has an internal thread.

12. The fastener of any preceding claim, wherein the bolt has an external thread.

13. The fastener of any preceding claim, wherein the spring is an open coil spring, or a disc spring.

14. A method of fastening a work piece (A, B) using the fastener of any preceding claim, comprising:
passing the hollow leg member through an opening in the work piece; and
rotating the bolt in a first direction, where rotation of the bolt in the first direction draws the hollow leg member in a proximal direction along the central axis, until the head of each leg of the hollow leg member engages with the work piece.

## Patentansprüche

1. Befestigungselement (10, 20), umfassend;
einen hohlen rohrförmigen Körper (13, 23) mit einem proximalen Ende und einem distalen Ende und einer Mittelachse, der eine distal ausgerichtete Anschlagoberfläche an dem proximalen Ende umfasst,
ein hohles Schenkelelement (14, 24), das ein proximales Ende und ein distales Ende aufweist, wobei das Schenkelelement innerhalb des Körpers entlang der Mittelachse des Körpers verschiebbar ist, wobei das Schenkelelement einen Gewindeabschnitt an dem proximalen Ende und eine Vielzahl von elastischen Schenkeln an dem distalen Ende aufweist und wobei jeder Schenkel einen Kopf an dem distalen Ende zum Eingreifen mit einem Werkstück aufweist und jeder Schenkel radial nach innen zu der Mittelachse hin vorgespannt ist,
einen Schraubbolzen (12, 22), der ein proximales Ende und ein distales Ende aufweist, wobei der Schraubbolzen innerhalb des Körpers entlang der Mittelachse des Körpers verschiebbar ist, mit einer proximal ausgerichteten Anschlagoberfläche an dem proximalen Ende und einem Gewindeabschnitt an dem proximalen Ende zum Eingreifen mit dem Gewindeabschnitt des hohlen Schenkelelements, sodass eine Drehung des Schraubbolzens in eine Richtung das hohle Schenkelelement in einer proximalen Richtung entlang der Mittelachse zieht und eine Drehung in die andere Richtung bewirkt, dass sich der Gewindeabschnitt des hohlen Schenkelabschnitts von dem Gewindeabschnitt des Schraubbolzens löst, wobei das distale Ende des Schraubbolzens dazu konfiguriert ist, die Schenkel radial nach außen zu drücken; und
eine Feder (15, 25), die zwischen der proximal ausgerichteten Anschlagoberfläche des Schraubbolzens und der distal ausgerichteten Anschlagoberfläche des hohlen rohrförmigen Körpers angeordnet ist und dazu konfiguriert ist, den Schraubbolzen in eine distale Richtung in Bezug auf den hohlen rohrförmigen Körper zu drücken,
**dadurch gekennzeichnet, dass** die Feder dazu konfiguriert ist, den Schraubbolzen in eine Eingriffsposition zu drücken, in der der Gewindeabschnitt des hohlen Schenkelelements mit dem Gewindeabschnitt des Schraubbolzens in Eingriff steht.

2. Befestigungselement nach Anspruch 1, wobei das proximale Ende des hohlen rohrförmigen Körpers durch eine Endwand geschlossen ist und die distal ausgerichtete Anschlagoberfläche durch eine Innenfläche der Endwand ausgebildet ist.

3. Befestigungselement nach Anspruch 1, wobei die distal ausgerichtete Anschlagoberfläche durch ein Stufenprofil ausgebildet ist, das sich radial nach innen von dem hohlen rohrförmigen Körper erstreckt.

4. Befestigungselement nach einem vorhergehenden Anspruch, wobei der hohle rohrförmige Körper eine drehbare Kappe (13b, 23b, 23c) an dem proximalen Ende umfasst, das die distal ausgerichtete Anschlagoberfläche enthält, wobei der Schraubbolzen in Bezug auf die Kappe verschiebbar ist und drehbar gekoppelt ist, um sich mit der Kappe zu drehen.

5. Befestigungselement nach einem vorhergehenden Anspruch, wobei der hohle rohrförmige Körper einen Anschlagabschnitt umfasst, der sich an dem distalen Ende radial nach innen erstreckt, und das Schenkelelement einen Flansch an dem proximalen Ende umfasst.

6. Befestigungselement nach Anspruch 5, wobei der Flansch des hohlen Schenkelelements eine flache Oberfläche senkrecht zu der Mittelachse des Befestigungselements enthält und der Anschlagabschnitt des hohlen rohrförmigen Körpers eine entsprechende flache Oberfläche senkrecht zu der Mittelachse des Befestigungselements aufweist.

7. Befestigungselement nach einem vorhergehenden Anspruch, wobei die distalen Enden der Schenkel sich über das distale Ende des Schraubbolzens hinaus erstrecken, wenn sich das hohle Schenkelelement in der am weitesten distalen Position befindet.

8. Befestigungselement nach einem vorhergehenden Anspruch, wobei das proximale Ende des Schraubbolzens einen Flansch aufweist, der sich radial nach außen erstreckt und dazu konfiguriert ist, den Schraubbolzen in Position in Bezug auf das hohle Körperelement zu sichern, und das hohle Körperelement eine Schulter aufweist, die dazu angeordnet ist, den Schraubbolzen daran zu hindern, sich in einer distalen Richtung zu bewegen.

9. Befestigungselement nach Anspruch 8, wobei der Flansch des Schraubbolzens die proximal ausgerichtete Anschlagoberfläche des Schraubbolzens enthält.

10. Befestigungselement nach einem der Ansprüche 1 bis 8, wobei die proximal ausgerichtete Anschlagoberfläche des Schraubbolzens durch eine proximale Endfläche des Schraubbolzens ausgebildet ist.

11. Befestigungselement nach einem vorhergehenden Anspruch, wobei das hohle Schenkelelement ein Innengewinde aufweist.

12. Befestigungselement nach einem vorhergehenden Anspruch, wobei der Schraubbolzen ein Außengewinde aufweist.

13. Befestigungselement nach einem vorhergehenden Anspruch, wobei die Feder eine offene Spiralfeder oder eine Tellerfeder ist.

14. Verfahren zum Befestigen eines Werkstücks (A, B) unter Verwendung des Befestigungselements nach einem vorhergehenden Anspruch, umfassend:
Führen des hohlen Schenkelelements durch eine Öffnung in dem Werkstück; und
Drehen des Schraubbolzens in einer ersten Richtung, wobei eine Drehung des Schraubbolzens in der ersten Richtung das hohle Schenkelelement in einer proximalen Richtung entlang der Mittelachse zieht, bis der Kopf jedes Schenkels des hohlen Schenkelelements mit dem Werkstück in Eingriff steht.

## Revendications

1. Élément de fixation (10, 20) comprenant ;
un corps tubulaire creux (13, 23) avec une extrémité proximale et une extrémité distale et un axe central, comprenant une surface de butée orientée de manière distale au niveau de l'extrémité proximale,
un élément de jambe creux (14, 24) présentant une extrémité proximale et une extrémité distale, l'élément de jambe pouvant être déplacé en translation au sein du corps le long de l'axe central du corps, l'élément de jambe présentant une partie filetée au niveau de l'extrémité proximale et une pluralité de jambes élastiques au niveau de l'extrémité distale et dans lequel chaque jambe présente une tête au niveau de l'extrémité distale en vue de venir en prise avec une pièce de fabrication, et chaque jambe est sollicitée radialement vers l'intérieur en direction de l'axe central,
un boulon (12, 22) présentant une extrémité proximale et une extrémité distale, le boulon pouvant être déplacé en translation au sein du corps le long de l'axe central du corps, avec une surface de butée orientée de manière proximale au niveau de l'extrémité proximale et une partie filetée au niveau de l'extrémité proximale en vue de venir en prise avec la partie filetée de l'élément de jambe creux, de sorte qu'une rotation du boulon dans une direction tire l'élément de jambe creux dans une direction proximale le long de l'axe central et une rotation dans l'autre direction amène la partie filetée de la partie de jambe creuse à se libérer de la partie filetée du boulon, dans lequel l'extrémité distale du boulon est conçue pour pousser les jambes radialement vers l'extérieur ; et
un ressort (15, 25) agencé entre la surface de butée orientée de manière proximale du boulon et la surface de butée orientée de manière distale du corps tubulaire creux, et conçu pour pousser le boulon dans une direction distale par rapport au corps tubulaire creux, **caractérisé en ce que**
le ressort est conçu pour pousser le boulon dans une position de prise où la partie filetée de l'élément de jambe creux est mise en prise avec la partie filetée du boulon.

2. Élément de fixation de la revendication 1, dans lequel l'extrémité proximale du corps tubulaire creux est fermée par une paroi d'extrémité et la surface de butée orientée de manière distale est formée par une face interne de la paroi d'extrémité.

3. Élément de fixation de la revendication 1, dans lequel la surface de butée orientée de manière distale est formée par un profil de marche s'étendant radialement vers l'intérieur à partir du corps tubulaire creux.

4. Élément de fixation d'une quelconque revendication précédente, dans lequel le corps tubulaire creux comprend un capuchon rotatif (13b, 23b, 23c) au niveau de l'extrémité proximale, y compris la surface de butée orientée de manière distale, dans lequel le boulon peut être déplacé en translation par rapport au capuchon et couplé de manière rotative pour tourner avec le capuchon.

5. Élément de fixation d'une quelconque revendication précédente, dans lequel le corps tubulaire creux comprend une partie de butée s'étendant radialement vers l'intérieur au niveau de l'extrémité distale, et l'élément de jambe comprend une bride au niveau de l'extrémité proximale.

6. Élément de fixation de la revendication 5, dans lequel la bride de l'élément de jambe creux comprend une surface plate perpendiculaire à l'axe central de l'élément de fixation et la partie de butée du corps tubulaire creux présente une surface plate correspondante perpendiculaire à l'axe central de l'élément de fixation.

7. Élément de fixation d'une quelconque revendication précédente, dans lequel les extrémités distales des jambes s'étendent au-delà de l'extrémité distale du boulon lorsque l'élément de jambe creux se trouve dans la position la plus distale.

8. Élément de fixation d'une quelconque revendication précédente, dans lequel l'extrémité proximale du boulon présente une bride s'étendant radialement vers l'extérieur et conçue pour maintenir le boulon en position par rapport à l'élément de corps creux, et l'élément de corps creux présente un épaulement agencé pour empêcher le boulon de se déplacer dans une direction distale.

9. Élément de fixation de la revendication 8, dans lequel la bride du boulon comprend la surface de butée orientée de manière proximale du boulon.

10. Élément de fixation de l'une quelconque des revendications 1 à 8, dans lequel la surface de butée orientée de manière proximale du boulon est formée par une face d'extrémité proximale du boulon.

11. Élément de fixation d'une quelconque revendication précédente, dans lequel l'élément de jambe creux présente un filetage interne.

12. Élément de fixation d'une quelconque revendication précédente, dans lequel le boulon présente un filetage externe.

13. Élément de fixation d'une quelconque revendication précédente, dans lequel le ressort est un ressort hélicoïdal ouvert, ou un ressort à disque.

14. Procédé de fixation d'une pièce de fabrication (A, B) à l'aide de l'élément de fixation d'une quelconque revendication précédente,
comprenant :
le passage de l'élément de jambe creux à travers une ouverture dans la pièce de fabrication ; et
la rotation du boulon dans une première direction, où une rotation du boulon dans la première direction tire l'élément de jambe creux dans une direction proximale le long de l'axe central, jusqu'à ce que la tête de chaque jambe de l'élément de jambe creux vienne en prise avec la pièce de fabrication.
